# FASCICULE DE BREVET EUROPEEN

(11) **EP 2 633 004 B1**
(45) Date de publication et mention de la délivrance du brevet: **17.12.2014**
(21) Numéro de dépôt: 11832127.2
(22) Date de dépôt: 27.10.2011
(51) Int. Cl.: C04B 7/24, C04B 7/28, C04B 7/36, C04B 7/44, C04B 7/60, C10J 3/18, C10K 1/00, F27B 7/20, C10J 3/84, F23G 5/027

(54) **INSTALLATION POUR LA FABRICATION D'UN CLINKER CIMENTIER COMPRENANT UN DISPOSITIF POUR LA PRODUCTION DE GAZ DE SYNTHÈSE À PARTIR DE DÉCHETS SOLIDES**
ANLAGE ZUR HERSTELLUNG VON ZEMENTKLINKERN
CEMENT CLINKER MANUFACTURING PLANT

(30) Priorité: 27.10.2010 FR 1058829
(43) Date de publication de la demande: 04.09.2013
(73) Titulaire: Vicat, 92095 Paris La Défense (FR)
(72) Inventeur: HUE, François, F-38300 Bourgoin Jallieu (FR); PASQUIER, Michel, F-69006 Lyon (FR); LAC, Philippe, F-73000 Chambery (FR)
(74) Mandataire: Chevalier, Renaud Philippe
(86) Numéro de dépôt international: PCT/FR2011/052512
(87) Numéro de publication internationale: WO 2012/056178

(56) Documents cités:
- WO-A1-2010/018436
- WO-A1-2010/067223
- WO-A2-2009/090478
- DE-A1- 19 608 093
- WEIL S ET AL: "Hydrogen energy from coupled waste gasification and cement production-a thermochemical concept study", INTERNATIONAL JOURNAL OF HYDROGEN ENERGY, ELSEVIER SCIENCE PUBLISHERS B.V., BARKING, GB, vol. 31, no. 12, 1 septembre 2006 (2006-09-01), pages 1674-1689, XP024899925, ISSN: 0360-3199, DOI: 10.1016/J.IJHYDENE.2005.12.015 [extrait le 2006-09-01]
- WEIL S ET AL: "gasification systems for biomass utilization", PROCEEDINGS OF THE 2ND INTERNATIONAL CONFERENCE ON HUMANOID, NANOTECHNOLOGY, INFORMATION TECHNOLOGY, COMMUNICATION AND CONTROL, ENVIRONMENT AND MANAGEMENT; PROCEEDINGS OF THE 2ND INTERNATIONAL CONFERENCE ON HUMANOID, NANOTECHNOLOGY, INFORMATION TECHN, 1 janvier 2005 (2005-01-01), pages 1-7, XP008153851,

## Description

L'invention concerne une installation pour la fabrication d'un clinker cimentier.

En cimenterie, il est connu d'utiliser des déchets solides comme source de combustible, et ce notamment dans une démarche de valorisation des déchets.

Afin d'assurer une qualité du ciment conforme aux normes en vigueur, les déchets solides doivent être soumis au préalable à des opérations de tri, de recherche d'une granulométrie soignée et d'homogénéisation, pour être en adéquation avec les exigences suivantes :
- une granulométrie suffisamment faible,
- un Pouvoir Calorifique Inférieur (ci-après abrégé « PCI ») suffisant et stable. Il s'agit de l'énergie thermique libérée par la réaction de combustion d'un kilogramme de combustible sous forme de chaleur sensible, à l'exclusion de l'énergie de vaporisation (chaleur latente) de l'eau présente en fin de réaction.
- une teneur faible en soufre et en chlore pour éviter des colmatages de la ligne de cuisson.
- une teneur en impuretés métalliques ou minérales faible, afin de ne pas perturber la flamme de l'installation de cimenterie ou les circuits de transport à cause de bouchages répétés.

En effet, pour que des déchets solides puissent être introduits en tuyère principale, il faut que la flamme résultant de leur combustion soit assez puissante pour assurer une bonne réaction de clinkérisation dans le four.

Cela nécessite de réduire ces déchets solides à une taille suffisamment petite pour que :
- la combustion s'initie quelques centimètres après leur sortie de tuyère,
- la combustion soit assez rapide pour que la flamme ne soit pas trop longue,
- la combustion soit complète afin d'éviter des zones de combustion réductrices,
- les impuretés minérales de ces déchets solides aient un temps de séjour suffisant dans le four au contact avec la matière pour être assimilées dans le clinker, et
- surtout, la chaleur en zone de clinkérisation soit suffisante.

C'est pourquoi, seuls des déchets solides dont la taille est inférieure à 10x10x1 mm sont tout à fait appropriés dans un procédé cimentier. Cette exigence nécessite plusieurs étapes de broyage onéreuses en consommation d'énergie et en logistique.

Par ailleurs, les déchets solides broyés sont généralement chargés en chlore et en soufre.

Or, il est communément reconnu dans la littérature cimentière que la présence en quantités significatives de chlore et de soufre dans la matière première et/ou dans les combustibles génère rapidement des collages dans le préchauffeur ou des anneaux dans le four. Les collages peuvent alors provoquer des bouchages, et donc nécessiter l'arrêt de l'installation de cimenterie.

Il est connu de limiter l'apport de ces éléments mineurs que sont le soufre et le chlore présents dans les déchets solides au moyen d'étapes de tri. Ces étapes de tri ont cependant leurs limites. De plus, il est très difficile de descendre en dessous d'une teneur en chlore de 1%.

Par ailleurs, le PCI des déchets solides est très inférieur à celui des combustibles nobles comme le charbon ou le coke de pétrole. Il est en outre grevé par l'humidité des déchets qui dépasse fréquemment les 10 %. Une partie de la consommation thermique du four est donc dédiée à leur séchage lors de leur introduction dans la ligne de cuisson avant qu'ils ne commencent à se consumer. Un séchage préalable des déchets est certes envisageable, mais il nécessite la mise en place d'un sécheur sur leur circuit de manutention, ce qui est souvent difficile à implanter dans les installations existantes et représente un investissement conséquent. Et même avec un séchage préalable, le PCI des déchets solides est souvent tellement faible qu'il est insuffisant pour produire une flamme suffisamment intense pour assurer une bonne clinkérisation.

Ainsi, bien que présentant un intérêt écologique, l'utilisation des déchets solides dans le domaine de la cimenterie comme source de combustible n'est pas sans inconvénients, puisque les déchets solides doivent être soumis à des traitements avant leur introduction dans le four, afin de se conformer aux exigences précitées quant à leur granulométrie, leur PCI et leur faible teneur en chlore et en soufre. Cela engendre inévitablement des coûts rapprochant alors le prix du déchet solide de celui de combustibles nobles. L'intérêt économique lié à l'utilisation de déchets solides dans le cadre d'un procédé cimentier disparaît.

Par ailleurs, dans des domaines techniques autres que la cimenterie, on utilise parfois comme source de combustible un gaz dénommé gaz de synthèse (ou aussi « syngas»). Il s'agit d'un mélange gazeux obtenu à partir de la gazéification de déchets, notamment des déchets solides, qui contient une quantité variable de monoxyde de carbone et d'hydrogène, ainsi qu'une faible quantité de dioxyde de carbone.

Il est en outre connu de purifier le gaz de synthèse de manière à réduire sa teneur en chlore et/ou en soufre. A cet égard, le document WO 2008/011213 A2 décrit un dispositif de gazéification de déchets solides qui comprend notamment un système d'extraction du soufre et un laveur d'acide chlorhydrique. Les applications du gaz de synthèse obtenu grâce au dispositif décrit dans ce document concernent la production d'électricité, de vapeur ou encore son utilisation comme matière première dans la fabrication de produits chimiques et de combustibles.

Le document DE 19608093 A1 divulgue un procédé et une installation pour la fabrication d'un clinker cimentier comprenant un dispositif (implicité) d'amenée du cru, la première partie du four rotatif qui fonctionne comme transformateur et préchauffeur du cru et un four équipé d'une tuyère principale (implicité) pour fournir la flamme. En plus, cette installation comprend en outre un réacteur pour production de gaz de synthèse à partir de déchets solides (= un dispositif de pyro-gazéification à deux étages). Les déchets solides sont prétraités dans un concasseur (broiement et homogénéisation), puis dans un dispositif de pyrolyse (génération de coke de pyrolyse), puis dans dispositifs pour séparer des métaux ferriques et non-ferriques et puis dans un broyeur pour diminuer la coke; les déchets solides sont amenés au gazéifieur sous forme transformée, notamment sous forme de coke de pyrolyse. L'installation comprend une unité de stockage des déchets solides, un gazéifieur, un récipient (=un cendrier) destiné à récupérer les laitiers (mais pas les cendres!) à l'issue de la gazéification, une unité de purification du gaz de synthèse qui comprend un laveur de réduction de la teneur en chlore mais pas un réacteur de réduction de la teneur en soufre du gaz de synthèse produit dans le gazéifieur. Le soufre, qui est contenu dans le gaz est présent sous forme de sulfure d'hydrogène qui est transformé en dioxyde de soufre qui va être fixé dans le clinker. En plus, il est implicité que l'installation comprend des moyens de transfert des laitiers récupérés dans le récipient vers une entrée du four en vue de leur incorporation au cru et des moyens d'amenée du gaz de synthèse purifié de l'unité de purification à la tuyère principale du four. L'installation comprend un dispositif d'extraction et de transfert des gaz du four (A) vers le dispositif de pyrolyse (A); le gaz de pyrolyse est transféré au gazéifieur.

Le document WO 2010/018436 A1 décrit une installation pour la fabrication d'un clinker cimentier comprenant en outre une installation de production de gaz de synthèse à partir de déchets solides où à l'issue de la gazéification les cendres sont récupérées. Mais ces cendres ne sont pas amenées au four, mais sont additionnées au clinker pendant le broyage final.

Dans le document WO2010/067223 A1 les cendres de la gazéification sont utilisés comme source d'énergie pour la calcination des crus. Mais dans le gazéificateur, un mélange des crus préchauffés aux températures de 500 à 800°C avec des déchets liquides et/ou solides a lieu.

Cependant, la gazéification de déchets solides produit des cendres (aussi appelées « mâchefers»). Il s'agit de résidus solides de la gazéification qui sont extraits à la base du gazéifieur dans un cendrier. Ces cendres contiennent principalement des espèces minérales telles que la silice, l'alumine, l'oxyde de fer et la chaux, ainsi que des espèces mineures telles que des sels et une faible quantité de résidus organiques, aussi dénommés les imbrûlés.

Le tableau 1 ci-dessous détaille une analyse chimique des cendres générées lors de la gazéification de déchets solides.

**Tableau 1- analyse chimique des cendres**

| **Entité chimique** | **Pourcentage massique typique** |
|---|---|
| SiO2 | 20 à 40 % |
| Al2O3 | 5 à 15 % |
| Fe2O3 | 1 à 3 % |
| CaO | 20 à 40 % |
| MgO | 1 à 3 % |
| SO3 | 1 à 8 % |
| Imbrûlés (matière carbonée) | 1 à 10 % |

Les cendres produites à l'issue de la gazéification de déchets solides ne sont guère valorisables, du fait de leur toxicité et de leur dangerosité (elles peuvent renfermer des carbones organiques volatils lourds), voire même elles sont pénalisantes. En effet, il est nécessaire de les traiter (par exemple par maturation) avant de les éliminer par enfouissement dans une décharge contrôlée. Alternativement, les cendres peuvent être vitrifiées à l'aide d'un apport de chaleur important fourni par exemple par une torche à plasma, ce qui occasionne également des surcoûts considérables dans le traitement de ces cendres. Or, les cendres représentent tout de même 10 à 30% du poids initial des déchets solides, ce qui peut amoindrir considérablement l'intérêt de gazéifier des déchets solides.

Le problème technique à la base de la présente invention est de fournir une installation pour la fabrication d'un clinker cimentier mettant en oeuvre une source d'énergie bon marché et non polluante, constituée par des déchets solides, et ce sans présenter les inconvénients liés à l'emploi des déchets solides dans le domaine de la cimenterie qui ont été détaillés ci-dessus.

La présente invention concerne une installation pour la fabrication d'un clinker cimentier qui comprend :
- un dispositif d'amenée du cru ;
- un disositif de transformation du cru qui comporte au moins un préchauffeur ;
- un four équipé d'une tuyère principale,
se caractérisant en ce qu'elle comprend en outre :
- une installation de production de gaz de synthèse à partir de déchets solides qui comprend :
   - une unité de stockage des déchets solides,
   - un gazéifieur,
   - un cendrier destiné à récupérer les cendres à l'issue de la gazéification,
   - une unité de purification du gaz de synthèse qui comprend un réacteur de réduction de la teneur en chlore et/ou un réacteur de la réduction de la teneur en soufre du gaz de synthèse produit dans le gazéifieur,
- des moyens de transfert des cendres récupérées dans le cendrier vers au moins une entrée du dispositif de transformation du cru et/ou du four en vue de leur incorporation au cru,
- des moyens d'amenée du gaz de synthèse purifié de l'unité de purification à la tuyère principale du four et/ou à au moins entrée du dispositif de transformation du cru.

Ainsi, l'installation pour la fabrication d'un clinker selon l'invention produit un combustible sous la forme d'un gaz de synthèse purifié qui est parfaitement approprié pour que la flamme résultant de sa combustion soit assez puissante pour assurer une bonne réaction de clinkérisation dans le four de l'installation.

De plus, de manière tout à fait avantageuse, l'installation pour la fabrication d'un clinker selon l'invention ne génère pas de déchets, puisque les cendres provenant de la gazéification sont aussi valorisées en étant intégrées à l'installation de cimenterie selon l'invention.

Plus précisément, grâce à l'installation pour la fabrication d'un clinker selon l'invention, les cendres produites lors de la gazéification sont valorisées selon plusieurs aspects, et ce du fait de la variété chimique de leurs constituants détaillée ci-dessus, à savoir du fait qu'elles contiennent des constituants inorganiques et organiques.

Les aspects de valorisation des cendres sont les suivants :
1) par la combustion ultime des imbrûlés que renferment les cendres. En effet, à une température supérieure à 850°C et avec l'oxygène présent au niveau du four et à certains niveaux du dispositif de transformation du cru (et tout particulièrement au niveau du précalcinateur que peut comporter le dispositif de transformation du cru), cela permet la combustion complète de ces imbrûlés qui constituent ainsi un apport de chaleur supplémentaire au four.
2) par la combinaison chimique des espèces minérales présentes dans les cendres avec les constituants du cru, et ce grâce au long temps de séjour de la matière et de la haute température régnant dans le four au cours de la clinkérisation. En d'autres termes, les espèces minérales des cendres constituent un apport massique non négligeable au clinker qui peut représenter de l'ordre de 4% du poids total de clinker fabriqué avec l'installation selon l'invention.

L'installation pour la fabrication d'un clinker peut en outre comprendre d'autres caractéristiques techniques qui sont détaillées ci-après, prises seules ou en combinaison entre elles. De ce fait, la présente invention ne se limite pas à une forme d'exécution particulière d'une installation pour la fabrication d'un clinker cimentier.

La combinaison chimique des espèces minérales des cendres avec les constituants du clinker peut être améliorée grâce à un broyage des cendres avant leur incorporation dans le cru soit au niveau du dispositif de transformation du cru, et tout particulièrement au niveau du préchauffeur ou du précalcinateur ou bien encore au niveau du four. C'est pourquoi, de manière avantageuse, l'installation pour la fabrication d'un clinker selon l'invention comprend en outre un broyeur des cendres recueillies dans le cendrier, ainsi que des moyens de transfert des cendres du cendrier vers le broyeur et des moyens de transfert des cendres broyées vers au moins une entrée du dispositif de transformation du cru et/ou du four.

Les moyens de transfert des cendres sont des moyens connus en soi et à la portée de l'homme du métier. De manière préférée, les moyens de transfert des cendres consistent en un élévateur à godets métalliques, un convoyeur à écailles métalliques, ou encore en un convoyeur à chaînes ou chaîne traînante.

Dans un mode de réalisation de l'invention, le broyeur est le broyeur cru de l'installation pour la fabrication d'un clinker. Les cendres sont alors mélangées et broyées avec les autres constituants du cru avant d'être introduites dans le préchauffeur. Selon ce mode de réalisation de l'invention, il est alors préconisé que la teneur en imbrûlés des cendres soit la plus faible possible, étant donné que les imbrûlés sont susceptibles de distiller lors du passage dans les zones de températures comprises entre 250°C et 700°C du préchauffeur de l'installation de fabrication d'un clinker selon l'invention.

Avantageusement, le dispositif de transformation du cru comporte en outre un précalcinateur et/ou une boîte à fumées.

Dans un mode de réalisation de l'invention, le cendrier est relié à une boîte à fumées disposée entre le précalcinateur et l'extrémité amont du four. Les cendres issues directement du cendrier ou bien du broyeur peuvent ainsi être transférées dans la boîte à fumées. Cela est tout particulièrement avantageux, car la température supérieure à 850°C régnant dans la boîte à fumées et son niveau d'oxygène contribuent à la combustion immédiate et complète des imbrûlés présents dans les cendres sans émission de carbone organiques volatils (COV). La chaleur ainsi libérée par cette combustion constitue un apport d'énergie permettant de diminuer la consommation thermique du four.

Avantageusement, l'installation pour la fabrication d'un clinker selon l'invention comprend en outre un dispositif d'extraction et de transfert des gaz du préchauffeur vers le gazéifieur. De cette manière, une partie des gaz avec une forte teneur en dioxyde de carbone et faible teneur en oxygène est extraite du préchauffeur à plus de 250°C et, en étant injecté dans le gazéifieur favorise la gazéification, car le dioxyde de carbone réagit avec le carbone des déchets solides pour former du monoxyde carbone. De manière préférée, le dispositif d'extraction et de transfert comprend au moins une canalisation de transport de gaz sur laquelle sont montés un filtre et un ventilateur. Le filtre permet de filtrer la poussière ventilée avec les gaz extraits du préchauffeur. Il s'agit avantageusement d'un filtre céramique. De cette manière, les gaz générés au niveau du préchauffeur peuvent être récupérés et valorisés dans l'installation pour la fabrication d'un clinker selon l'invention, du fait de leur injection dans le gazéifieur et ainsi de leur contribution à la gazéification des déchets solides.

Dans un autre mode de réalisation de l'invention, l'installation pour la fabrication d'un clinker comprend en outre une canalisation de transport de gaz reliant le refroidisseur du four au gazéifieur. De cette manière, l'air quaternaire (à savoir l'air réchauffé) recueilli au niveau du refroidisseur du four est valorisé en étant injecté dans le gazéifieur. Cet air réchauffé peut ainsi aussi contribuer à la gazéification des déchets solides, étant précisé que le gazéifieur gazéifie des déchets solides en les chauffant à une température pouvant dépasser 1000°C en présence d'une quantité limitée d'oxygène (quantité insuffisante pour permettre la combustion des déchets). La gazéification est en effet un procédé d'oxydation partielle qui transforme les déchets solides en un mélange d'oxyde de carbone et d'hydrogène en faisant réagir à haute température les déchets solides avec une quantité d'oxygène et/ou de vapeur.

Ainsi, outre la valorisation des cendres qui présente tout son intérêt et qui a été expliqué ci-dessus, l'installation pour la fabrication d'un clinker selon l'invention a pour autre avantage que les gaz extraits du préchauffeur, ainsi que l'air réchauffé au niveau du refroidisseur ne sont pas forcément des déchets mais, au contraire, ils peuvent être parfaitement valorisés en contribuant à la gazéification des déchets solides. En d'autres termes, l'installation pour la fabrication d'un clinker selon l'invention peut s'alimenter par autoproduction en gaz nécéssaires à la gazéification de déchets solides et ainsi produire le combustible utilisé dans le procédé cimentier mis en oeuvre dans cette installation. De ce point de vue, l'installation pour la fabrication d'un clinker selon l'invention fonctionne « en cycle fermé ».

Par ailleurs, l'humidité des déchets solides évoquée ci-dessus ne représente plus un problème, pour autant qu'elle ne soit pas trop élevée. En effet, l'humidité participe aux réactions de gazéification et augmente le PCI du gaz de synthèse produit en apportant de l'hydrogène.

En outre, le temps de séjour des déchets solides dans le gazéifieur permet de lisser les variations de PCI des déchets solides, et ainsi d'alimenter le four avec un gaz au PCI plus régulier, ce qui améliore le procédé de cuisson du clinker.

La gazéification peut être réalisée au moyen d'un gazéifieur choisi notamment parmi les gazéifieurs à lit fixe à contre-courant ou à co-courant, les gazéifieurs à lit dense, les gazéifieurs à lit fluidisé circulant, les gazéifieurs à lit fluidisé rotatif, les gazéifieurs à lit entraîné, ou encore au moyen d'un dispositif de pyro-gazéification à deux étages.

Les types de gazéifieurs disponibles sur le marché sont suffisamment variés, pour que l'on puisse utiliser des déchets solides grossièrement broyés. On peut ainsi parfaitement s'affranchir des exigences de granulométrie décrites plus haut.

En effet, le temps de séjour dans le gazéifieur est le temps nécessaire pour réduire la granulométrie des solides à la taille suffisante pour passer au travers de la grille de sortie du gazéifieur et se retrouver dans les cendres. De fait, la granulométrie des déchets introduits dans le gazéifieur n'est donc limitée que par le procédé du gazéifieur moins exigeant que le procédé de cuisson au niveau de la tuyère principale du four.

A charge thermique équivalente, la flamme dans un four aura une meilleure combustion avec du gaz de synthèse qu'avec des déchets solides, même finement broyés. Le gazéifieur présente donc comme avantage pour le four de transformer des déchets difficiles à brûler en un combustible « quasi-noble ».

La gazéification des déchets solides conduit à la production d'un gaz de synthèse chargé en goudrons. Or, la condensation des goudrons risque d'encrasser et de rendre inopérant le réacteur de réduction de la teneur en chlore et en soufre. C'est pourquoi, optionnellement, l'installation pour la fabrication d'un clinker comprend en outre une torche à plasma disposée entre le gazéifieur et l'unité de purification du gaz de synthèse. De cette manière, la torche à plasma détruit les goudrons présents dans le gaz de synthèse. Plus précisément, il s'agit d'un craquage des goudrons en molécules plus petites incondensables, en les portant grâce à la torche à plasma à une température plus élevée.

De manière préférée, l'installation de production de gaz de synthèse comprend en outre une torchère située en aval du gazéifieur. Ainsi, en cas d'arrêt non planifié du four de l'installation de fabrication d'un clinker, le gazéifieur continue à produire du gaz de synthèse quelques minutes le temps d'épuiser la charge complète de déchets contenus à l'intérieur du gazéifieur. Durant ce temps, pour ne plus envoyer de gaz de synthèse dans le four rotatif, le gaz de synthèse est brûlé dans la torchère.

De plus, la torchère est aussi utile pour gérer les phases transitoires de démarrage et d'arrêt aussi bien du gazéifieur que du four, et ce en permettant d'ajuster la production de gaz de synthèse à la demande du four en complément à un système de réintroduction du gaz de synthèse dans le gazéifieur dont peut être aussi équipée l'installation de fabrication d'un clinker selon l'invention.

Avantageusement, l'installation de production de gaz de synthèse comprend un module de refroidissement destiné à rendre la température du gaz de synthèse sortant du gazéifieur compatible avec le fonctionnement de l'unité de purification du gaz de synthèse.

Le PCI et le débit du gaz de synthèse produit dans le gazéifieur doivent satisfaire au besoin du four de l'installation pour la fabrication d'un clinker selon l'invention. Plus précisément, pour un apport énergétique attendu, plus le PCI du gaz de synthèse est faible plus son volume est élevé. Ainsi, le dimensionnement des conduites de transport du gaz de synthèse jusqu'à son point d'injection dans la tuyère principale du four, ainsi que le dimensionnement des ventilateurs de tirage et de la gaine tubulaire dédiée au gaz de synthèse sont fortement liés à son PCI.

C'est pourquoi, afin d'optimiser le PCI du gaz de synthèse, il est avantageux que l'installation de fabrication d'un clinker selon l'invention comporte d'autres caractéristiques techniques choisies parmi les suivantes :
- un moyen d'ajustement de la température de l'air injecté dans le gazéifieur entre la température ambiante et 300°C avec un générateur de gaz chauds ou bien des gaz disponibles provenant du four et tels qu'évoqués ci-dessus : il peut s'agir de l'air quaternaire provenant du refroidisseur du four mais également des gaz extraits du préchauffeur.
- un moyen d'injection d'oxygène dans la gaine d'injection d'air du gazéifieur,
- un moyen d'injection de vapeur d'eau dans la gaine d'injection d'air du gazéifieur,
- un moyen d'apport en combustible noble dans le gazéifieur pour procurer un enrichissement en carbone. De préférence, l'apport en combustible noble est réalisé dans le circuit d'alimentation en déchets du gazéifieur.

L'oxygène peut être introduit en plus ou moins grande proportion en lieu et place de tout ou partie de l'air injecté dans le gazéifieur, permettant ainsi de produire un gaz de synthèse plus riche (à savoir plus concentré, car débarrassé partiellement ou totalement de l'azote, qui ne fait également qu'absorber des calories et diluer le gaz de synthèse). De plus, cela permet de réduire les problèmes provoqués par le faible PCI du gaz de synthèse.

Le combustible noble peut être introduit en plus ou moins grande proportion en lieu et place de tout ou partie des déchets introduits dans le gazéifieur, permettant ainsi de produire un gaz de synthèse à plus fort PCI (car enrichi en carbone par l'apport du combustible noble selon la réaction chimique : C + CO₂ → 2 CO). Le combustible noble peut être, entre autres, du charbon ou du coke de pétrole.

La vapeur d'eau peut être pure ou diluée dans le but d'augmenter le PCI du gaz de synthèse selon la réaction chimique : C + H₂O → CO + H₂.

De manière avantageuse, l'installation pour la fabrication d'un clinker selon l'invention comprend en outre un système de régulation du débit gazeux du gaz de synthèse qui est avantageusement disposé en sortie du réacteur de réduction de la teneur en chlore et/ou en soufre.

Ces différents moyens décrits ci-dessus permettent de stabiliser la quantité et la qualité du gaz de synthèse, et ainsi de limiter l'utilisation à la tuyère principale du four ou du précalcinateur d'un combustible noble réputé homogène en qualité pour stabiliser la cuisson dans le four.

Dans le cadre de la présente invention, on entend par réduction de la teneur en chlore et/ou en soufre du gaz de synthèse la réduction en composés chlorés et/ou soufrés que peut comprendre le gaz de synthèse à la sortie du gazéifieur. Il peut s'agir notamment de HCl et de SOx.

Avantageusement, le réacteur de réduction de la teneur en chlore du gaz de synthèse comprend des absorbants, des adsorbants, des zéolites ou encore tout autre système connu dans les industries chimiques (notamment le raffinage) qui est destiné à réduire la teneur en chlore d'un gaz.

Il peut aussi s'agir d'un laveur, à savoir un réacteur mettant en oeuvre des lavages humides avec une solution de chaux ou bien encore une pulvérisation d'un acide de manière à capter le chlore.

Le réacteur de réduction de la teneur en soufre du gaz de synthèse peut consister en tout dispositif adéquat connu de l'homme du métier pour réduire la teneur en soufre d'un gaz. Avantageusement, le réacteur de réduction de la teneur en soufre du gaz de synthèse consiste en un laveur qui comprend une solution contenant de la chaux ou une solution contenant de la soude ou bien encore un dispositif à voie sèche ou semi-sèche de captation à la chaux.

Du fait que l'installation de fabrication d'un clinker selon l'invention comprend un gazéifieur et une unité de purification du gaz de synthèse, on n'est plus astreint aux exigences imposées de la teneur en chlore et/ou en soufre, ainsi qu'à la granulométrie la plus faible possible des déchets solides broyés détaillées ci-dessus pour leur incorporation dans un procédé cimentier. Ainsi, la gamme de déchets solides valorisables pouvant être utilisés dans l'installation de fabrication d'un clinker selon l'invention se trouve considérablement élargie par rapport aux installations de cimenteries actuellement en activité.

Les déchets solides pouvant être mis en oeuvre dans l'installation de fabrication d'un clinker selon l'invention sont très diversifiés. Ils peuvent consister en des sciures imprégnées de déchets, des Déchets Industriels Banals (abrégé « DIB ») tels que bois, papier, carton, plastiques, des pneus entiers ou déchiquetés, des résidus de broyage automobiles, des farines animales, des refus de tri d'ordures ménagères, des charbons de pyrolyse, des schistes bitumeux ou encore des terres polluées.

Préférentiellement, l'installation pour la fabrication d'un clinker selon l'invention comprend en outre un système d'injection d'oxygène dans la ligne de cuisson du four. Cet oxygène peut être introduit dans la ligne de cuisson à l'aide d'une lance additionnelle située plus ou moins loin du point d'injection du gaz de synthèse ou au moyen d'une lance introduite dans une gaine tubulaire réservée à cet effet, par exemple dans la tuyère principale ou dans la tuyère de précalcination du précalcinateur. Cela présente l'avantage d'améliorer les conditions de combustion et de baisser le bilan thermique et l'énergie spécifique de ventilation de la ligne de cuisson.

De manière préférée, le four que comprend l'installation de fabrication d'un clinker selon l'invention est un four rotatif.

Dans des modes de réalisation de l'invention, le four peut être choisi dans le groupe constitué par les fours à voie humide, les fours longs à voie sèche, les fours à voie semi-humide, les fours à voie semi-sèche, les fours à voie sèche avec préchauffeur à cyclones mais dépourvu de précalcinateur.

La tuyère principale du four peut être conçue à partir d'une tuyère principale que l'on a équipée dans sa partie centrale d'un canal d'alimentation additionnel (ou autrement dit d'une gaine tubulaire additionnelle) destiné à alimenter la flamme en gaz de synthèse.

Dans un autre mode de réalisation de l'invention, la tuyère principale peut être équipée d'un canal annulaire additionnel destiné à alimenter la flamme en gaz de synthèse.

Le diamètre d'une tuyère principale ne devant pas excéder une certaine valeur en fonction du diamètre du four (paramètre défini par les constructeurs de tuyères), le choix de l'équipement d'une tuyère principale par un canal d'alimentation ou d'un canal annulaire additionnel dépendra du diamètre du four qui est avantageusement un four rotatif.

Dans un autre mode de réalisation de l'invention, une tuyère à gaz additionnelle peut être logée plus ou moins près d'une tuyère principale existante ou bien être posée sur la tuyère principale, et ce de telle manière que le gaz de synthèse circulant dans cette tuyère additionnelle soit orienté vers la flamme, et de préférence au-dessus de la tuyère principale.

Au regard de ces différents exemples de réalisation d'une tuyère principale, on comprend aisément que l'utilisation de gaz de synthèse comme une source de combustible dans la ligne de cuisson s'intègre parfaitement et facilement dans des installations existantes pour la fabrication d'un clinker, puisque cette utilisation nécessite seulement une adaptation au niveau de la tuyère principale, de manière à créer un moyen d'approvisionnement en cette source de combustible.

L'invention sera mieux comprise à l'aide de la description détaillée qui est exposée ci-dessous, à titre d'exemple non limitatif, au regard du dessin annexé représentant deux formes de réalisation d'une installation pour la fabrication d'un clinker cimentier selon l'invention :
- La figure 1 représente une vue schématique d'une partie d'une première installation pour fabrication d'un clinker par voie sèche avec précalcination selon l'invention.
- La figure 2 représente une vue schématique d'une partie d'une deuxième installation pour la fabrication d'un clinker par voie sèche avec précalcination selon l'invention.

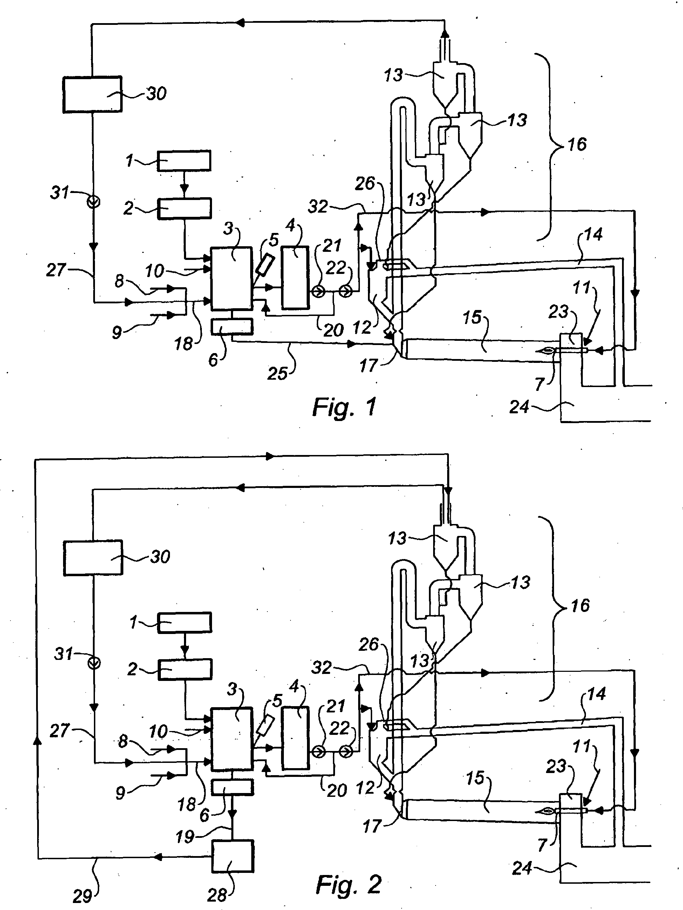

Sur les figures 1 et 2, l'installation de production de gaz de synthèse comprend :
- une unité de stockage de déchets solides 1,
- un doseur à déchets 2 des déchets provenant de l'unité de stockage 1,
- un gazéifieur 3 dans lequel s'effectue la gazéification des déchets solides,
- une unité de purification du gaz de synthèse 4,
- une torche à plasma 5,
- un cendrier 6 destiné à recueillir les cendres obtenues à l'issue de la gazéification,
- un moyen d'injection d'oxygène 8 dans la gaine d'injection d'air 18 du gazéifieur 3,
- un moyen d'injection de vapeur d'eau 9 dans la gaine d'injection d'air 18 du gazéifieur 3,
- un moyen d'apport de combustible noble 10 dans le gazéifieur 3,
- un système de réintroduction de gaz de synthèse 20 dans le gazéifieur 3,
- un premier ventilateur 21 situé à la sortie de l'unité de purification du gaz de synthèse 4,
- un deuxième ventilateur 22 situé entre le système de réintroduction de gaz de synthèse 20 et la tuyère principale 7.

Le premier ventilateur 21 et le deuxième ventilateur 22 constituent un système de régulation du débit gazeux du gaz de synthèse qui est introduit à la tuyère principale 7. En effet, le premier ventilateur 21 permet de maintenir une dépression. Cela régule ainsi le débit du gaz de synthèse produit par le gazéifieur 3.

Le débit de gaz de synthèse injecté dans la tuyère principale 7 est régulé par le deuxième ventilateur 22. Et le débit excédentaire du gazéifieur entre le premier ventilateur 21 et le deuxième ventilateur 22 est recirculé dans le gazéifieur 3 au moyen du système de réintroduction de gaz de synthèse 20.

Les ciments usuels sont fabriqués à partir d'un mélange d'environ 80% de calcaire et de 20% d'un matériau riche en silice et alumine, tel que l'argile. Selon l'origine des matières premières, ce mélange peut être corrigé par apport de bauxite, de sable, de minerai de fer ou d'autres matériaux de manière à fournir le complément d'alumine, de silice et d'oxyde de fer requis. Après le concassage des blocs extraits de la carrière, un mélange aussi homogène que possible est effectué avec d'éventuels ajouts d'autres composants. Il s'agit d'une phase de préhomogénéisation. Ensuite, un broyage du mélange des matières premières est effectué pour obtenir la finesse requise, suivi d'une étape d'homogénéisation par brassage ultime dans un silo d'homogénéisation non représenté. On obtient alors un cru broyé ou autrement dit une farine.

La farine est transportée depuis le silo d'homogénéisation jusqu'au préchauffeur 16.

Dans le préchauffeur 16, des gaz chauds sortant du four rotatif 15 de l'installation de cimenterie réchauffent progressivement de 60°C à 900°C la farine qui circule dans les cyclones 13 selon un parcours hélicoïdal à contre-courant de ces gaz chauds par gravité. La farine en s'échauffant au-delà de 800°C environ se décarbonate partiellement en libérant du dioxyde de carbone et de l'eau.

Un dispositif d'extraction et de transfert des gaz qui comprend une canalisation de transport de gaz 27 sur laquelle sont montés un ventilateur 31 et un filtre céramique 30 et qui est reliée au gazéifieur 3 permet de récupérer des gaz à forte teneur en dioxyde de carbone et faible teneur en oxygène au niveau du préchauffeur 16 pour les injecter dans le gazéifieur 3.

Le gaz de synthèse purifié dans l'unité de purification de gaz de synthèse 4 est acheminé grâce au moyen d'amenée 32 en partie vers le précalcinateur 12 et en partie vers la tuyère principale 7 du four 15.

Le précalcinateur 12 comprend une première gaine d'air tertiaire 14 et une deuxième gaine d'air tertiaire 26 qui apportent l'oxygène nécessaire à la combustion dans le précalcinateur 12 et de l'enthalpie provenant de la chaleur récupérée au refroidisseur 24.

La gaine d'air tertiaire 26 est connectée au précalcinateur 12 par la partie supérieure du précalcinateur 12.

Le capot de chauffe 23 canalise vers le four rotatif 15 l'air chaud remontant du refroidisseur 24 et provenant du refroidissement du clinker.

Dans la première gaine d'air tertiaire 14 est incorporée une partie de la farine provenant des cyclones 13 du préchauffeur 16. La décarbonatation débutée dans le préchauffeur 16 se poursuit, et ce à une température comprise entre 650 et 900°C. Il y a alors libération de gaz carbonique permettant d'obtenir la chaux nécessaire à la fabrication de clinker.

Le précalcinateur 12 permet d'optimiser l'échange de chaleur entre la farine et les gaz chauds, et aussi d'obtenir la décarbonatation quasi-complète du CaCO₃ provenant en majeure partie du calcaire.

Dans la boîte à fumées 17 du préchauffeur 16 de la figure 1 se retrouvent :
- la farine, en provenance du cyclone inférieur 13,
- les cendres recueillies dans le cendrier 6 et acheminées grâce au moyen de transfert 25,
- le cru en provenance du précalcinateur 12.

La cuisson a lieu dans le four 15 qui est un four rotatif à une température maximale de 1450°C (avec une température de flamme de l'ordre de 2000°C).

Le four rotatif 15 est constitué d'un tube de plusieurs mètres de diamètre, dont l'axe est légèrement incliné et qui tourne sur lui-même (1 à 6 tr/min). La farine avance à l'intérieur du four rotatif 15 en glissant et roulant le long des parois internes recouvertes de briques réfractaires. Elle s'agglomère aux environs de 1300°C pour former des nodules, suite à la fusion partielle de ses constituants. La chaux, l'alumine, la silice et l'oxyde de fer, apportés par les matières premières se combinent entre eux pour former de nouveaux composés chimiques entrant dans la composition minéralogique du clinker (qui constitue ainsi une roche artificielle).

De plus, à l'entrée de la tuyère principale 7 est disposé un système d'injection d'oxygène 11. Cela présente l'avantage d'améliorer les conditions de combustion et de baisser le bilan thermique et l'énergie spécifique de ventilation de la ligne de cuisson.

A l'issue de la cuisson, le clinker obtenu est refroidi au moyen du refroidisseur 24, puis broyé avec du gypse et éventuellement d'autres constituants pour former un ciment.

L'installation pour la fabrication d'un clinker représentée à la figure 2 diffère de celle représentée à la figure 1 en ce qu'elle comprend un broyeur cru 28 dans lequel les cendres recueillies dans le cendrier 6 sont mélangées et broyées avec les autres constituants du cru avant leur incorporation dans le préchauffeur 16. Cette installation comprend en outre des moyens de transfert 19 des cendres recueillies dans le cendrier 6 au broyeur cru 28 et des moyens de transfert 29 du mélange broyé des cendres avec les autres constituants du clinker au préchauffeur 16.

## Revendications

1. Installation pour la fabrication d'un clinker cimentier comprenant :
- un dispositif d'amenée du cru ;
- un dispositif de transformation du cru qui comporte au moins un préchauffeur (16);
- un four (15) équipé d'une tuyère principale (7),
**caractérisée en ce qu'**elle comprend en outre :
- une installation de production de gaz de synthèse à partir de déchets solides qui comprend :
• une unité de stockage des déchets solides (1),
• un gazéifieur (3),
• un cendrier (6) destiné à récupérer les cendres à l'issue de la gazéification,
• une unité de purification du gaz de synthèse (4) qui comprend un réacteur de réduction de la teneur en chlore et/ou un réacteur de la réduction de la teneur en soufre du gaz de synthèse produit dans le gazéifieur (3),
- des moyens de transfert des cendres récupérées dans le cendrier (6) vers au moins une entrée du dispositif de transformation du cru et/ou du four (15) en vue de leur incorporation au cru,
- des moyens d'amenée (32) du gaz de synthèse purifié de l'unité de purification (4) à la tuyère principale (7) du four (15) et/ou à au moins une entrée du dispositif de transformation du cru.

2. Installation pour la fabrication d'un clinker cimentier selon la revendication 1, **caractérisée en ce qu'**elle comprend en outre :
- un broyeur (28) des cendres recueillies dans le cendrier (6),
- des moyens de transfert (19) des cendres du cendrier (6) vers le broyeur (28),
et
- des moyens de transfert (29) des cendres broyées vers au moins une entrée du dispositif de transformation du cru et/ou du four (15).

3. Installation pour la fabrication d'un clinker cimentier selon l'une quelconque des revendications précédentes, **caractérisée en ce que** le dispositif de transformation du cru comporte en outre un précalcinateur (12) et/ou une boîte à fumées (17).

4. Installation pour la fabrication d'un clinker cimentier selon l'une quelconque des revendications précédentes, **caractérisée en ce qu'**elle comprend en outre un dispositif d'extraction et de transfert des gaz du préchauffeur (16) vers le gazéifieur (3).

5. Installation pour la fabrication d'un clinker cimentier selon la revendication 4, **caractérisée en ce que** le dispositif d'extraction et de transfert des gaz comprend au moins une canalisation de transport de gaz (27) sur laquelle sont montés un filtre (30) et un ventilateur (31).

6. Installation pour la fabrication d'un clinker cimentier selon l'une quelconque des revendications précédente, **caractérisée en ce qu'**elle comprend en outre une canalisation de transport de gaz reliant le refroidisseur (24) du four (15) au gazéifieur (3).

7. Installation pour la fabrication d'un clinker cimentier selon l'une quelconque des revendications précédentes, **caractérisée en ce qu'**elle comprend en outre une torche à plasma (5) disposée entre le gazéifieur (3) et l'unité de purification du gaz de synthèse (4).

8. Installation pour la fabrication d'un clinker cimentier selon l'une quelconque des revendications précédentes, **caractérisée en ce qu'**elle comprend en outre un système de régulation du débit gazeux du gaz de synthèse (21,22).

9. Installation pour la fabrication d'un clinker cimentier selon l'une quelconque des revendications précédentes, **caractérisée en ce que** le four (15) est un four choisi dans le groupe constitué par le four rotatif, le four à voie humide, le four long à voie sèche, le four à voie semi-humide, le four à voie semi-sèche.

10. Installation pour la fabrication d'un clinker cimentier selon l'une quelconque des revendications précédentes, **caractérisée en ce que** le gazéifieur (3) est choisi parmi les gazéifieurs à lit fixe à contre-courant ou à co-courant, les gazéifieurs à lit dense, les gazéifieurs à lit fluidisé circulant, les gazéifieurs à lit fluidisé rotatif, les gazéifieurs à lit entraîné, ou un dispositif de pyro-gazéification à deux étages.

11. Installation pour la fabrication d'un clinker cimentier selon l'une quelconque des revendications précédentes, **caractérisée en ce qu'**elle comprend en outre un moyen d'apport en combustible noble (10) dans le gazéifieur (3).

12. Installation pour la fabrication d'un clinker cimentier selon l'une quelconque des revendications précédentes, **caractérisée en ce qu'**elle comprend en outre un moyen d'injection d'oxygène (8) dans la gaine d'injection d'air (18) du gazéifieur (3).

13. Installation pour la fabrication d'un clinker cimentier selon l'une quelconque des revendications précédentes, **caractérisée en ce qu'**elle comprend en outre un moyen d'injection de vapeur d'eau (9) dans la gaine d'injection d'air (18) du gazéifieur (3).

14. Installation pour la fabrication d'un clinker cimentier selon l'une quelconque des revendications précédentes, **caractérisée en ce que** le réacteur de réduction de la teneur en chlore du gaz de synthèse comprend des absorbants, des adsorbants, des zéolites ou un laveur.

15. Installation pour la fabrication d'un clinker cimentier selon l'une quelconque des revendications précédentes, **caractérisée en ce que** le réacteur de réduction de la teneur en soufre du gaz de synthèse consiste en un laveur qui comprend une solution contenant de la chaux ou une solution contenant de la soude, ou un dispositif à voie sèche ou semi-sèche de captation à la chaux.

## Patentansprüche

1. Installation zur Herstellung eines Zementklinkers, die folgendes umfasst:
- eine Vorrichtung für die Zuführung des Rohmaterials;
- eine Vorrichtung zur Umwandlung des Rohmaterials, die zumindest einen Vorerhitzer (16) umfasst;
- einen Ofen (15), der mit einer Hauptdüse (7) ausgestattet ist,
**dadurch gekennzeichnet, dass** sie darüber hinaus folgendes umfasst:
- eine Installation zur Herstellung von Synthesegas aus soliden Abfällen, die folgendes umfasst:
- eine Einheit zum Lagern der soliden Abfälle (1),
- einen Gaserzeuger (3),
- einen Aschebehälter (6), der dazu bestimmt ist, die Asche aus der Gaserzeugung aufzufangen,
- eine Einheit zur Reinigung des Synthesegases (4), die einen Reaktor zur Verringerung des Chlorgehalts und/ oder einen Reaktor zur Verringerung des Schwefelgehalts im Synthesegas enthält, das im Gaserzeuger (3) hergestellt wird,
- Vorrichtungen zum Transfer der im Aschebehälter (6) aufgefangenen Asche zu zumindest einem Einlauf der Vorrichtung zur Umwandlung des Rohmaterials und/ oder des Ofens (15), um diese ins Rohmaterial einzuarbeiten,
- Vorrichtungen zum Heranführen (32) des gereinigten Synthesegases aus der Reinigungseinheit (4) zur Hauptdüse (7) des Ofens (15) und/ oder zu zumindest einem Einlauf der Vorrichtung zur Umwandlung des Rohmaterials.

2. Installation zur Herstellung eines Zementklinkers nach Anspruch 1, **dadurch gekennzeichnet, dass** sie darüber hinaus folgendes umfasst:
- ein Mahlwerk (28) für die im Aschebehälter (6) aufgefangene Asche,
- Vorrichtungen zum Transfer (19) der Asche aus dem Aschebehälter (6) ins Mahlwerk (28),
und
- Vorrichtungen zum Transfer (29) der gemahlenen Asche zu zumindest einem Einlauf der Vorrichtung zur Umwandlung des Rohmaterials und/ oder des Ofens (15).

3. Installation zur Herstellung eines Zementklinkers nach irgendeinem der vorherigen Ansprüche, **dadurch gekennzeichnet, dass** die Vorrichtung zur Umwandlung des Rohmaterials darüber hinaus einen Vorcalcinator-Ofen (12) und/ oder eine Rauchkammer (17) umfasst.

4. Installation zur Herstellung eines Zementklinkers nach irgendeinem der vorherigen Ansprüche, **dadurch gekennzeichnet, dass** sie darüber hinaus eine Vorrichtung zum Abführen und Transferieren der Gase aus dem Vorerhitzer (16) zum Gaserzeuger (3) umfasst.

5. Installation zur Herstellung eines Zementklinkers nach Anspruch 4, **dadurch gekennzeichnet, dass** die Vorrichtung zum Abführen und Transferieren der Gase zumindest einen Transportkanal für Gas (27) umfasst, auf dem ein Filter (30) und ein Lüfter (31) montiert sind.

6. Installation zur Herstellung eines Zementklinkers nach irgendeinem der vorherigen Ansprüche, **dadurch gekennzeichnet, dass** sie darüber hinaus einen Transportkanal für Gas umfasst, der den Kühler (24) des Ofens (15) mit dem Gaserzeuger (3) verbindet.

7. Installation zur Herstellung eines Zementklinkers nach irgendeinem der vorherigen Ansprüche, **dadurch gekennzeichnet, dass** sie darüber hinaus einen Plasmabrenner (5) umfasst, der zwischen dem Gaserzeuger (3) und der Einheit zur Reinigung des Synthesegases (4) angeordnet ist.

8. Installation zur Herstellung eines Zementklinkers nach irgendeinem der vorherigen Ansprüche, **dadurch gekennzeichnet, dass** sie darüber hinaus ein System zum Regulieren des Gasflusses an Synthesegas (21, 22) umfasst.

9. Installation zur Herstellung eines Zementklinkers nach irgendeinem der vorherigen Ansprüche, **dadurch gekennzeichnet, dass** der Ofen (15) ein Ofen ist, der aus der Gruppe ausgewählt wird, die aus dem Drehofen, dem Ofen im Nassverfahren, dem langen Ofen im Trockenverfahren, dem Ofen im Halbnassverfahren, dem Ofen im Halbtrockenverfahren gebildet wird.

10. Installation zur Herstellung eines Zementklinkers nach irgendeinem der vorherigen Ansprüche, **dadurch gekennzeichnet, dass** der Gaserzeuger (3) aus den Festbettvergasungsöfen nach dem Gegenstrom- oder dem Gleichstromprinzip, Dichtbettvergasungsöfen, Festbettvergasungsöfen mit zirkulierendem Wirbelbett, mit rotierendem Wirbelbett, Festbettvergasungsöfen mit Schleppbett oder einer Vorrichtung zur zweistufigen Pyro-Gaserzeugung ausgewählt wird.

11. Installation zur Herstellung eines Zementklinkers nach irgendeinem der vorherigen Ansprüche, **dadurch gekennzeichnet, dass** sie darüber hinaus eine Vorrichtung zur Zuführung eines Edelbrennstoffes (10) in den Gaserzeuger (3) umfasst.

12. Installation zur Herstellung eines Zementklinkers nach irgendeinem der vorherigen Ansprüche, **dadurch gekennzeichnet, dass** sie darüber hinaus eine Vorrichtung zum Injizieren von Sauerstoff (8) in den Luft-Injektionsschlauch (18) des Gaserzeugers (3) umfasst.

13. Installation zur Herstellung eines Zementklinkers nach irgendeinem der vorherigen Ansprüche, **dadurch gekennzeichnet, dass** sie darüber hinaus eine Vorrichtung zum Injizieren von Wasserdampf (9) in den Luft-Injektionsschlauch (18) des Gaserzeugers (3) umfasst.

14. Installation zur Herstellung eines Zementklinkers nach irgendeinem der vorherigen Ansprüche, **dadurch gekennzeichnet, dass** der Reaktor zur Verringerung des Chlorgehalts im Synthesegas Absorptionsmittel, Adsorptionsmittel , Zeolithe oder einen Spüler umfasst.

15. Installation zur Herstellung eines Zementklinkers nach irgendeinem der vorherigen Ansprüche, **dadurch gekennzeichnet, dass** der Reaktor zur Verringerung des Schwefelgehalts im Synthesegas aus einem Spüler besteht, der eine Lösung enthält, in der Kalk oder eine Lösung enthalten ist, die Natron enthält, oder eine Vorrichtung im Trocken- oder Halbtrockenverfahren zum Auffangen mit Kalk.

## Claims

1. A cement clinker manufacturing plant comprising:
- a device for bringing in feedstock;
- a feedstock conversion device that includes at least one preheater (16);
- a furnace (15) equipped with a main tuyere (7),
**characterized in that** it also comprises:
- a plant producing syngas from solid waste that comprises:
• a solid waste storage unit (1),
• a gasifier (3),
• an ash pan (6) designed to recover the ash resulting from the gasification,
• a first syngas purification unit (4) that comprises a reduction reactor for reducing the chlorine content and/or a reduction reactor for reducing the sulfur content of the syngas produced in the gasifier (3),
- means for transferring the ash recovered in the ash pan (6) to at least one inlet of the feedstock conversion device and/or the furnace (15) so as to be incorporated into the feedstock,
- means (32) for bringing in purified syngas from the purification unit (4) to the main tuyere (7) of the furnace (15) and/or at least one inlet of the feedstock conversion device.

2. The cement clinker manufacturing plant according to claim 1, **characterized in that** it also comprises:
- a grinder (28) for the ash collected in the ash pan (6),
- means (19) for transferring the ash from the ash pan (6) to the grinder (28),
- and
- means (29) for transferring the ground ash to at least one inlet of the feedstock conversion device and/or the furnace (15).

3. The cement clinker manufacturing plant according to any one of the preceding claims, **characterized in that** the feedstock conversion device also includes a precalcinator (12) and/or a smoke box (17).

4. The cement clinker manufacturing plant according to any one of the preceding claims, **characterized in that** it also comprises a device for extracting and transferring gases from the preheater (16) toward the gasifier (3).

5. The cement clinker manufacturing plant according to claim 4, **characterized in that** the extraction and transfer device comprises at least one gas transport line (27) on which a filter (30) and fan (31) are mounted.

6. The cement clinker manufacturing plant according to any one of the preceding claims, **characterized in that** it also comprises a gas transport line connecting the cooler (24) of the furnace (15) to the gasifier (3).

7. The cement clinker manufacturing plant according to any one of the preceding claims, **characterized in that** it also comprises a plasma torch (5) positioned between the gasifier (3) and the syngas purification unit (4).

8. The cement clinker manufacturing plant according to any one of the preceding claims, **characterized in that** it also comprises a system for regulating the gas flow rate of the syngas (21, 22).

9. The cement clinker manufacturing plant according to any one of the preceding claims, **characterized in that** the furnace (15) is a furnace chosen from the group consisting of wet furnaces, long dry process furnaces, semiwet process furnaces, semi-dry process furnaces, dry process furnaces with a cyclone preheater but with no precalcinator.

10. The cement clinker manufacturing plant according to any one of the preceding claims, **characterized in that** the gasifier (3) is chosen from among counter-current or co-current fixed bed gasifiers, dense bed gasifiers, circulating fluidized bed gasifiers, rotary fluidized bed gasifiers, driven bed gasifiers, or using a two-stage pyrogasification device.

11. The cement clinker manufacturing plant according to any one of the preceding claims, **characterized in that** it also comprises means (10) for contributing noble fuel in the gasifier (3).

12. The cement clinker manufacturing plant according to any one of the preceding claims, **characterized in that** it also comprises means (8) for injecting oxygen into the air injection sheath (18) of the gasifier (3).

13. The cement clinker manufacturing plant according to any one of the preceding claims, **characterized in that** it also comprises means for injecting steam (9) into the air injection sheath (18) of the gasifier (3).

14. The cement clinker manufacturing plant according to any one of the preceding claims, **characterized in that** the reduction reactor for reducing the chlorine content of the syngas comprises absorbents, adsorbents, zeolites or a washer.

15. The cement clinker manufacturing plant according to any one of the preceding claims, **characterized in that** the reduction reactor for reducing the sulfur content of the syngas consists of a washer that comprises a solution containing lime or a solution containing sodium hydroxide or a dry or semi-dry lime collection device.
